# EUROPEAN PATENT APPLICATION

(11) **EP 4 575 800 A1**
(43) Date of publication of application: **25.06.2025**
(21) Application number: 23217941.6
(22) Date of filing: 19.12.2023
(51) Int. Cl.: G06F 11/36

(54) **METHOD FOR SETTING UP A FUZZING TEST FOR A FUZZ TARGET**

(71) Applicant: Robert Bosch GmbH, 70442 Stuttgart (DE)
(72) Inventor: Gehrer, Stefan, Pittsburgh, 15222 (US); Kulandaivel, Sekar, Pittsburgh, PA, 15201 (US); Nicolae, Maria Irina, 70197 Stuttgart (DE); Guajardo Merchan, Jorge, Pittsburgh, Pennsylvania, 15216 (US); Huth, Christopher, 74076 Heilbronn (DE); Ring, Martin, 72290 Lossburg (DE); Eisele, Max Camillo, 71638 Ludwigsburg (DE); Gehrmann, Tobias, 70193 Stuttgart (DE); Pappachan, Pradeep, Pittsburgh, PA, 15216 (US)

(57) **Abstract**

Method (10) for generating fuzz drivers (25) for a fuzz setup (26), comprising:
- inputting (11) documentation (21) of a fuzz target (27) into a language understanding Artificial Intelligence, AI (22),
- generating (12), by the language understanding AI (22), Application Programming Interface, API calls and their arguments from the documentation (21),
- generating (13) at least one fuzz driver (25) from the API calls and their arguments.

## Description

### Background

The dynamic software testing method fuzzing gets more widely employed. Fuzzing or fuzz testing is an automated software testing technique that involves providing invalid, unexpected, or random data as inputs to a fuzz target mostly in form of a computer program.

Fuzz drivers connect a fuzzer to a fuzz target to inject the fuzzer generated input into the software under test. In order to generate a fuzz driver some learning base needs to be present. Such a base might be existing test cases, so that program traces can be recorded, or existing unit tests, which can be transformed into fuzz drivers. In cases without such learning base fuzz drivers cannot be generated or only with low quality.

### Summary

A first aspect of the present disclosure relates to a method for generating fuzz drivers for a fuzz setup.

The method of the present disclosure includes
- inputting documentation of a fuzz target into a language understanding Artificial Intelligence, Al,
- generating, by the language understanding Al, Application Programming Interface, API calls and their arguments from the documentation,
- generating at least one fuzz driver from the API calls and their arguments.

A second aspect of the present disclosure relates to a method training a language understanding Al for generating fuzz drivers for a fuzz setup.

The method of the present disclosure includes
- generating fuzz drivers for a fuzz setup according to claim 1 of the first aspect of the present disclosure,
- selecting and executing fuzz drivers according to claim 7 of the first aspect of the present disclosure,
- generating fitness values of the fuzz driver at executing the fuzz drivers,
- feeding back the fitness values to the language understanding Al,
- updating the language understanding Al with the fitness values.

A third aspect of the present disclosure relates to a computer system configured to perform the method according to the first aspect of the present disclosure (or an embodiment thereof) and/or the second aspect of the present disclosure (or an embodiment thereof).

A fourth aspect of the present disclosure relates to a computer program configured to perform the method according to the first aspect of the present disclosure (or an embodiment thereof) and/or the second aspect of the present disclosure (or an embodiment thereof).

A fifth aspect of the present disclosure relates to a computer-readable medium or signal storing and/or containing the computer program according to the fourth aspect of the present disclosure (or an embodiment thereof).

The technique of the first to fifth aspects can have advantageous technical effects.

The techniques of the present disclosure allow fuzz drivers to be effectively generated or in other words automated fuzz harness generation to enable fuzz testing. This generation aims at cases when no existing test cases are present. For example, fuzz drivers can be generated when only some documentation is present. Scope statements and product requirement documents are good sources, since they contain all developed interfaces. With additional prior test cases, fuzz driver generation may be improved.

The techniques of the present disclosure allow - in the context of automatic fuzz driver generation - to decide which API calls to select and in which order to call them in a harness and how to handle the arguments for the prior selected API calls.

The techniques of the present disclosure allow generation of fuzz drivers when no source code is present, when black-box fuzzers or debugger-driven fuzzers are utilized.

This invention disclosure pertains the dynamic software testing method fuzzing, especially the automated fuzz harness generation to enable fuzz testing.

According to techniques of the present disclosure, natural-language understanding is used to parse e.g., software documentation to extract in which order and/or with which input Application Programming Interfaces (API) calls of the software under test should be used. With these API call sequences and parameters high quality fuzz drivers are generated i.e., being able to cover large parts of the program code while fuzzing.

Some terms are used in the present specification in the following manner:
The terms "fuzzing or fuzz testing" describe the automated process of sending generated invalid, unexpected, or random input to a target like a computer program and monitoring its reaction for exceptions such as crashes, failing built-in code assertions, or potential memory leaks.
A "fuzzer or fuzzing engine" generates semi-valid inputs for a fuzz target that are valid enough to not be directly rejected by the parser, but do create unexpected behaviors deeper in the program and are 'invalid enough' to expose corner cases that have not been properly dealt with.
A "fuzz target" is a software program or function that is intended to be tested via fuzzing. A main characteristic of a fuzz target is that it is a binary, a library, an API, or rather anything that can consume input like e.g. bytes.
A "glue code, wrapper, harness, or fuzz driver" connects a fuzzer to a fuzz target to inject the fuzzer generated input into the software under test.
A "fuzz test" is the combined version of a fuzzer and a fuzz target. A fuzz target can then be instrumented code with a fuzzer attached to its inputs. A fuzz test is executable. The fuzzer can also start, observe, and stop multiple running fuzz tests (usually hundreds or thousands per second), each with a slightly different input generated by the fuzzer.
A "test case or input" is one specific input and test run from a fuzz test. Usually for reproducibility, interesting runs (finding new code paths or crashes) are saved. That way a specific test case, with its corresponding input, can also be run on a fuzz target, which is not connected to a fuzzer, i.e. in its release version.
An "instrumentation" is used to make coverage metric observable, e.g. during compilation. Instrumentation is inserting instructions into a program in order to generate feedback from the execution. It is mostly realized by the compiler and can, for instance, describe the reached code blocks during execution.
"Coverage-guided Fuzzing" is using code coverage information as feedback during fuzzing, in order to detect if an input caused the execution of new code paths/blocks.
"Mutation-based Fuzzing" is creating new inputs by using a set of known inputs (corpus) and randomly applying mutations to them.
"Generation-based Fuzzing" is creating new inputs from scratch for instance by using input models or input grammars.
A "mutator" is a function that takes bytes as input and outputs a small random mutation of the input.
A "corpus" (plural: corpora) is a set of inputs. Initial inputs are seeds.

### Description of the Figures

**Fig. 1** is a flow diagram illustrating a method for generating fuzz drivers for a fuzz setup according to techniques of the present disclosure.
**Fig. 2** shows schematically a possible system of the present techniques.
**Fig. 3** shows schematically a possible system of the present techniques.
**Fig. 4** shows a flow diagram illustrating a method for training a language understanding Al for generating fuzz drivers for a fuzz setup according to techniques of the present disclosure.

### Detailed Description

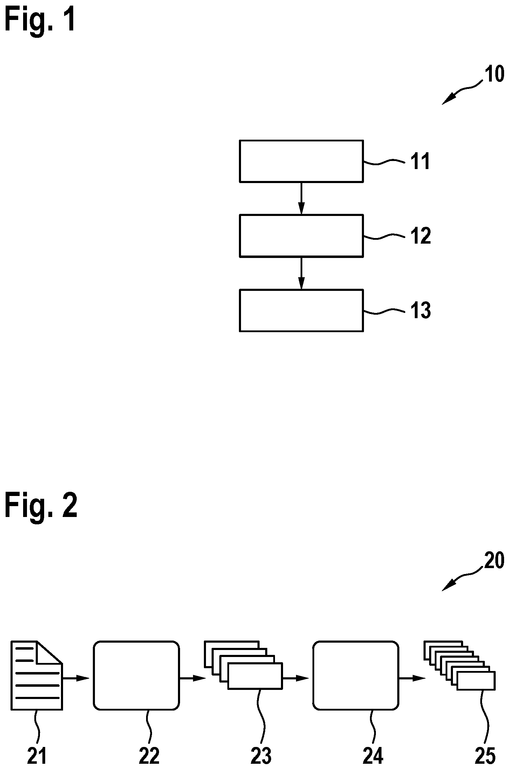

**Fig. 1** discloses and proposes a method for generating fuzz drivers for a fuzz setup.

The method proposed in this disclosure uses natural-language understanding to parse some fuzz target documentation to generate Application Programming Interface, API, calls and their arguments and to generate at least one fuzz driver for directing it to the fuzz target.

The fuzz target may include software which may be designed to control, regulate and/or monitor a technical system, in particular a cyber-physical system as e.g., cars, robots, loT devices, e-bikes, car-2-X infrastructure, and in particular at least one computing unit of a vehicle. In particular, the software may be embedded software designed to be executed on an embedded (i.e. e.g. task-specific) system. The method of this disclosure may be relevant for automated security testing.

The method proposed in this disclosure may be used during development, before the release of the software under test. Own or known software may be fuzzed e.g., when flashed on the target to have a real testable system and not a simulated one. Also, unknown or fuzz software deliveries from 3rd parties may be fuzzed which may have a black-box fashion, i.e., as binaries or shared library files.

Further, the method proposed in this disclosure may decide in which order and with which input Application Programming Interfaces (API) calls of the software under test should be used.

A first step of the method proposed in this disclosure is to input 11 documentation of a fuzz target into a language understanding Artificial Intelligence, Al. The documentation may include at least one of handbook, scope statement, product requirements document, code, debug symbols of a binary, logs, such as recorded communication to and from the fuzz target, and/or programming comments e.g. from a source code level work. The language understanding Al may comprise at least on of Large Language Model, LLM, Natural Language Processing, NLP, Natural Language Understanding, NLU, and/or wherein the language understanding Al is a trained or a foundation model.

Optional, source code of the fuzz target may be input into the language understanding Al. Such input may increase the quality of the generated API calls and their arguments and with it the quality of the generated fuzz drivers. Without input of the source code black-box fuzzers or debugger-driven fuzzers may be used for fuzzing the fuzz target.

A second step is to generate 12, by the language understanding Al, Application Programming Interface, API, calls and their arguments from the documentation. Arguments are parameters for the respective API like for example path of function parameters. The arguments depend on the respective API.

The output of the generation may be saved in a list or set where optional fitness values are saved alongside, such as {{API₁(arg₁, arg₂, ..., argₘ), value_{fitness}}, {API₂(arg₂, arg₃, ..., argₖ), value_{fitness}}, ... {...}}.

An API call corresponds to APIₓ and an argument corresponds to argₓ.

Without the optional fitness values (value_{fitness}) the above list can be used by omitting the fitness values. Arguments may occur multiple times, e.g., in different APIs. Further, APIs can occur multiple times with varying arguments.

Optional, when generating API calls and their arguments a fitness value for each API call may be generated. In a setup without feedback to the Al, the Al estimates at creation of the API call how good the later on generated fuzz driver will be. In a setup with feedback to the Al, the Al may make better estimates due to the feedback loop.

The fitness function may be defined as a function which takes a candidate solution to the problem as input and produces as output how "fit" our how "good" the solution is with respect to the problem in consideration. Here, the fitness value of the fuzz driver may be measured by generated code coverage of the executed fuzz driver.

A third step is to generate 13 at least one fuzz driver from the API calls and their arguments. The generation of the one or more fuzz drivers may be achieved by a fuzz driver generator. The optional fitness values may not be used for generation of the fuzz drivers.

Correspondingly, with the generated APIs and arguments fuzz drivers are generated. Each API and argument can result in none or many fuzz drivers, i.e., Gen_{fuzzdriver} (APIₙ, arg1, ..., argₘ) -> fuzzdriver_{f}(APIₙ, arg₁, ..., argₘ), f e N₀, so that f is within the set of all natural numbers.

The resulting fuzz drivers may be saved as well with their corresponding (optional) fitness value, i.e. {{fuzzdriver_{f}(APlₙ, arg₁, ..., argₘ), value_{fitness}}, ..., {...}}.

Optional, the least one generated fuzz driver is input into a set of fuzz drivers and/or a corpus. The corpus can be used for further systems or methods and also for training Al. This approach is especially applicable for very broad fuzz drivers e.g. for standard applications.

Optional, the following one or two steps are executed as part of the method:
Selecting at least one fuzz driver according to a selection strategy, the selection strategy may be heuristic or metric. The actual metrics as e.g. to pick the "next best" may be calculated from algorithms or the Al itself. Further, the selection strategy may comprise at least one of first-in-first-out, first-in-last-out, highest fitness value, deepest Abstract Syntax Tree, AST, derived by static analysis. The fuzz driver selection strategy may be matched or adapted to the fuzzing process. The selection step may not only include which fuzz driver(s) are selected but also in which order the fuzz driver(s) are selected.

Then, executing the selected fuzz driver(s) on the fuzz target until an end criterion is met is carried out. The end criterion may comprise at least one of new coverage gain for some minutes, found crash, covering code locations unreached by prior fuzz drivers. This step includes the actual fuzzing using the selected fuzz driver(s) on the fuzz target. The fuzzing may target only programs e.g. compiled code (for c++, C, python, java, javascript, rust, php, etc. for example) or more general executable code.

Further optional, a fitness value of the fuzz driver is measured or generated by generated code coverage of the executed fuzz driver. Thus, the fitness value may indicate to what extend or which areas of the code of the fuzz target have been reached by the respective fuzz driver. The fitness value is then fed back to the language understanding Al for training purposes in order to improve the further generations of API calls and arguments.

Also optional, the measured fitness value is fed back to generating at least one fuzz driver. Then, the generation may be re-triggered depending on the fitness of the fuzz drivers. Fuzz drivers which cannot compiled may be marked with a very low fitness value, e.g. 0, but can be kept for further prompt improvement.

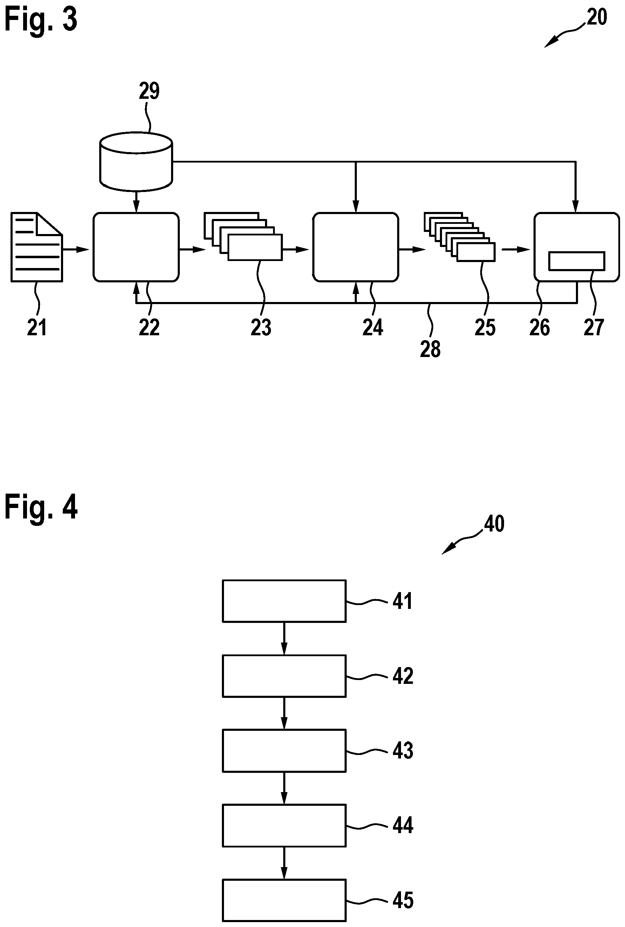

Fig. 2 schematically shows a computer system 20 in which the techniques of the present disclosure can be used to for generating fuzz drivers for a fuzz setup by means of a language understanding Al. The computer system 20 is designed to perform the method 10 according to Fig. 1 and the method 40 according to Fig. 4. The computer system 20 can be realized in hardware and/or software. Accordingly, the system shown in Figure 2 can be regarded as a computer program designed to execute or perform the method 10 according to Fig. 1 and the method 40 according to Fig. 4.

As an input 21 to the system, documentation is provided. This documentation includes documentation of the software under test i.e. the fuzz target as described above for Fig. 1. For instance, it can be the scope statements and product requirements document, and comments from a source code level work as well.

A language understanding Al 22 is inputted with the documentation. The Al is a trained model to identify all (or at least the most interesting) API calls and arguments from the documentation. The Al used here can be some Large Language Model (LLM) or other means of Natural Language Processing (NLP) or more concretely Natural Language Understanding (NLU).

A foundation model can be used as well. If that is the case, follow-up training can include specific source code bases, such as typical software e.g. from a company's cloud and documentation thereof, e.g. from the company's document server.

An output 23 of the Al are API calls and arguments which may be provided as a list or set of generated (or extracted) API calls with their respective arguments.

A fuzz driver generator 24 is input with the identified APIs and arguments for generating the fuzz drivers. As the interesting APIs and arguments are already identified by the Al 22 the fuzz driver generator 24 may be kept simple. The fuzz driver generator 24 generates the fuzz drivers 25 which are the actual drivers (or harnesses) to inject the fuzzer generated input into the software under test. One or more fuzz drivers 25 are generated by the fuzz driver generator 24.

Above referenced elements of the system 20 or parts thereof may correspond to steps of the method 10. Especially, details of the method steps may apply to system elements.

Fig. 3 schematically shows a computer system 20 in which the techniques of the present disclosure can be used for generating fuzz drivers. The computer system 20 may correspond to the computer system 20 of Fig. 2. The computer system 20 is adapted to execute the method 10 according to Fig. 1 and the method 40 according to Fig. 4. In particular, the computer system 20 of Fig. 3 is adapted to execute the training method 40 according to Fig. 4. The computer system 20 can be realized in hardware and/or software. Accordingly, the system shown in Fig. 3 can be regarded as a computer program designed to execute the method 10 according to Fig. 1 and the method 40 according to Fig. 4.

Elements 21, 22, 23, 24 and 25 of the computer system 20 shown in Fig. 3 may correspond to or be identical with the elements 21, 22, 23, 24 and 25 of the computer system 20 shown in Fig. 2. In other words, at least one of elements 26, 27, 28 and 29 as well as their connections may be optional to the system 20. The system or method according to Fig. 3 may be named as executing a fuzz setup or generating fuzz drivers and applying them or a selection of them to a fuzz target.

A fuzz setup 26 is input with the fuzz drivers 25 and used to run the fuzz drivers 25, i.e., to fuzz a fuzz target 27 with the fuzz drivers 25. Optional, here, the fitness for the fuzz drivers 25 can be measured in terms of coverage that each fuzz driver 25 can generate. Thereby, a fitness value is assigned to the fuzz driver 25 or an already existing fitness value is updated or corrected. The already existing fitness value may have been assigned to the API call corresponding to the fuzz driver 25 by the Al 22. The fuzz drivers 25 may be tried or applied for a short amount of time compared to the overall fuzz campaign, as a large number of fuzz drivers 25 may be applied to the fuzz target 27.

The system 20 includes feedback 28 or a feedback loop from the fuzz setup 26 to the Al 22 and/or the fuzz driver generator 24. The feedback returns details from the fuzzing to the Al 22 and/or the fuzz driver generator 24 to improve generation of the API calls and/or the fuzz drivers 25. Details may include acceptance of the fuzz drivers 25, fuzzing time or the like. Alternatively or additionally, the feedback information may include a fitness value for each fuzz driver 25.

Such fitness value of the fuzz driver 25 is measured or generated by generated code coverage of the executed fuzz driver 25. Thus, the fitness value may indicate to what extend or which areas of the code of the fuzz target 27 have been reached by the respective fuzz driver 25. The fitness value is then fed back to the language understanding Al 22 for training purposes in order to improve the further generations of API calls and arguments. This can be implemented, e.g., as a prompt refinement when working with LLMs.

Alternatively or additionally, the fitness value is fed back to the fuzz driver generator 24. Then, the generation may be re-triggered depending on the fitness of the fuzz driver 25. Fuzz drivers 25 which cannot compiled may be marked with a very low fitness value, e.g. 0, but can be kept for further prompt improvement.

Further, source code 29 is input into the Al 22. It can be a source code repository or some other means of code storage. For better results on the generated API calls and arguments, the source code may be the code of the software under test i.e., the fuzz target 27.

The source code 29 is further input into the fuzz driver generator 24. When source code is made available to the fuzz driver generator 24, then e.g. a function signature can be directly taken (e.g., copy & paste) and used as a fuzz driver. Unit test could be available which can be easily turned into fuzz drivers. With source code, some static analysis (e.g. AST) can reveal the flow of the input - and then where a fuzz driver can inject input to potentially trigger the most of the program.

The source code 29 is further input into the fuzz setup 26. Source code can reveal whether a unit, component and/or system should run in a certain context, such as some initialization. It also gives the proper initialization of variables or memory regions. Source code can also help how to (re-)set the fuzz target to a known state; or whether a finding is a false positive.

Fig. 4 is a flow chart illustrating a method 40 for training a language model or a language understanding Al. The language model or Al is set up for automated generation of fuzz drivers for a fuzz setup or fuzz test. Training method 40 uses parts of the generation method 10. Though not shown in detail in Fig. 4 the training method 40 may use the parts of the generation method 10 not described in conjunction with Fig. 4 as well. The training method 40 may include all parts of the generation method 10. Especially, training method 40 may include at least one including all dependent claims of the generation method 10.

In conclusion, success of the fuzzing action of a fuzz driver is assessed and fed back to the Al. At the Al, the feedback is used to adapt the Al e.g. by adapting weights to improve generation of the next API calls and their arguments from which fuzz drivers are generated.

The method 40 for training a language understanding Al for generating fuzz drivers for a fuzz setup, includes the following steps.

In a first step, generating 41 fuzz drivers for a fuzz setup according to claim 1 of the training method 10 which includes the (sub)steps of:
- inputting documentation of a fuzz target into a language understanding Artificial Intelligence, Al,
- generating, by the language understanding Al, Application Programming Interface, API, calls and their arguments from the documentation,
- generating at least one fuzz driver from the API calls and their arguments.

This first step may be repeated and could be run synchronized with the following steps. Alternatively, the fuzz driver generation is not run synchronously, and the generated fizz drivers are for example stored in a corpus. The corpus then may act as basis for the following steps.

In a second step, selecting 42 and executing fuzz drivers according to claim 7 of the training method 10 which includes the (sub)steps of:
- selecting at least one fuzz driver according to a selection strategy, the selection strategy comprises at least one of first-in-first-out, highest fitness value, deepest Abstract Syntax Tree, AST, derived by static analysis,
- executing the selected fuzz driver(s) on the fuzz target until an end criterion is met, the end criterion comprises at least one of no new coverage gain for some minutes, found crash, covering code locations unreached by prior fuzz drivers.

In a third step, generating 43 fitness values of the fuzz driver at executing the fuzz drivers. Optionally, the fitness value of the fuzz driver may be generated by measuring the generated code coverage of the executed fuzz driver. The fitness value is a measure of the success of the fuzz driver in fuzzing the fuzz target.

In a fourth step, feeding 44 back the fitness values to the language understanding Al. The fitness values can be seen as a reward for training of the language understanding Al.

In a fifth step, updating 45 the language understanding Al with the fitness values. For example, weights of the Al or language model are updated with the fitness values (value of the reward). The result of the method is an Al or language model that is better trained on new unlabeled data i.e. provides more reliable fuzz drivers. Unlabeled data may be here, for example, documentation from an engine control unit code and optionally corresponding source code.

According to one embodiment, the method further comprises that the reward is approximated by executing only one test of the automated testing tests. This allows the training to be accelerated.

## Claims

1. Method (10) for generating fuzz drivers (25) for a fuzz setup (26), comprising:
- inputting (11) documentation (21) of a fuzz target (27) into a language understanding Artificial Intelligence, Al (22),
- generating (12), by the language understanding Al (22), Application Programming Interface, API calls and their arguments from the documentation (21),
- generating (13) at least one fuzz driver (25) from the API calls and their arguments.

2. Method according to claim 1, wherein the least one generated fuzz driver (25) is input into a set of fuzz drivers and/or a corpus.

3. Method according to claim 1 or 2, wherein the documentation (21) comprises at least one of handbook, scope statement, product requirements document, code, debug symbols of a binary, logs, such as recorded communication to and from the fuzz target, and/or programming comments.

4. Method according to one of claims 1 to 3, wherein the language understanding Al (22) comprises at least one of Large Language Model, LLM, Natural Language Processing, NLP, Natural Language Understanding, NLU, and/or wherein the language understanding Al is a trained or a foundation model.

5. Method according to one of claims 1 to 4, wherein when generating API calls and their arguments further generating a fitness value for the API call.

6. Method according to one of claims 1 to 5, wherein source code of the fuzz target (27x) is input into the language understanding Al (22).

7. Method according to one of claims 1 to 6, further comprising
- selecting at least one fuzz driver (25) according to a selection strategy, the selection strategy is heuristic or metric and/or comprises at least one of first-in-first-out, first-in-last-out, highest fitness value, deepest Abstract Syntax Tree, AST, derived by static analysis,
- executing the selected fuzz driver(s) (25) on the fuzz target (27) until an end criterion is met, the end criterion comprises at least one of no new coverage gain for some minutes, found crash, covering code locations unreached by prior fuzz drivers.

8. Method according to claim 7, wherein a fitness value of the fuzz driver is measured by generated code coverage of the executed fuzz driver (25) and the fitness value is fed back to the language understanding Al (22) and/or wherein the fitness value of the fuzz driver (25) is measured by generated code coverage of the executed fuzz driver (25) and the fitness value is fed back to generating at least one fuzz driver (25).

9. Method for training a language understanding Al (22) for generating fuzz drivers (25) for a fuzz setup (26), comprising:
- generating fuzz drivers (25) for a fuzz setup (26) according to claim 1,
- selecting and executing fuzz drivers (25) according to claim 7,
- generating fitness values of the fuzz driver (25) at executing the fuzz drivers (25),
- feeding back the fitness values to the language understanding Al (22),
- updating the language understanding Al with the fitness values.

10. Method according to claim 9, wherein the fitness value of the fuzz driver (25) is generated by measuring the generated code coverage of the executed fuzz driver (25).

11. Computer system configured to perform a method according to one of claims 1 to 10.

12. Computer program configured to perform a method according to one of claims 1 to 10.

13. Computer-readable medium or signal storing and/or containing the computer program according to claim 12.
